# EUROPEAN PATENT APPLICATION

(11) **EP 4 760 961 A1**
(43) Date of publication of application: **17.06.2026**
(21) Application number: 25814659.6
(22) Date of filing: 14.05.2025
(51) Int. Cl.: H01M 50/503

(54) **BATTERY CASE AND BATTERY**

(30) Priority: 29.05.2024 CN 202421202596 U
(71) Applicant: Eve Energy Co., Ltd., Huizhou, Guangdong 516006 (CN)
(72) Inventor: ZHANG, Weijin, Huizhou, Guangdong 516006 (CN)
(74) Representative: Studio Torta S.p.A.
(86) International application number: PCT/CN2025/094919
(87) International publication number: WO 2025/246941

(57) **Abstract**

The application provides a battery box and a battery, relating to a field of battery technology. The battery box includes a box body, a box cover, and a conductive member. The box cover is mounted on the box body to define an installation cavity. The conductive member is elastic and located in the installation cavity. One of the box cover and the box body is connected to the conductive member, while the other abuts against the conductive member, and the conductive member is in an elastically compressed state.

## Description

The present application claims priority to the Chinese patent application with application number 202421202596.9 filed with the China National Intellectual Property Administration (CNIPA) on May 29, 2024, the entire contents of the above application are incorporated herein by reference.

### TECHNICAL FIELD

The present application relates to the field of battery technology, specifically to a battery box and a battery.

### BACKGROUND

Batteries are electrical products that generate electromagnetic radiation during use and are also susceptible to interference from external electromagnetic radiation. Therefore, to reduce the electromagnetic radiation interference caused by the battery to the outside environment and the electromagnetic radiation interference received by the battery, it is necessary to enhance the electromagnetic radiation resistance of the battery box. Currently, this is mainly achieved by electrically connecting the box body and the box cover to form an electromagnetic shielding body with electromagnetic radiation resistance, thereby improving the battery's electromagnetic radiation resistance. To achieve the electrical connection between the box body and the box cover, conductive surfaces are reserved at the corresponding electrical connection positions between the box body and the box cover, and bolts are used to fasten the box cover to the box body, pressing the conductive surface on the box cover against the conductive surface on the box body to establish conductive contact between the box body and the box cover.

### SUMMARY

In this electrical connection method, bolts are required to fasten the box cover to the box body to press the conductive surface on the box cover against the conductive surface on the box body. As a result, the battery production line needs to include a bolt-fastening station, which leads to lower production efficiency and increases the production cost of the battery.

The present application provides a battery box and a battery that can improve the production efficiency of the battery.

In a first aspect, the present application provides a battery box, which includes a box body, a box cover, and a conductive member. The box cover is mounted on the box body to define an installation cavity. The conductive member is elastic and located in the installation cavity. One of the box cover and the box body is connected to the conductive member, while the other abuts against the conductive member, and the conductive member is in an elastically compressed state.

In a second aspect, the present application provides a battery, which includes a battery module and the aforementioned battery box, with the battery module disposed in the installation cavity.

### Beneficial Effects

In the present application, by using an elastic conductive member as the conductive component between the box body and the box cover and keeping the conductive member in an elastically compressed state, the conductive member can maintain tight contact with the box body and the box cover based on an elasticity of the conductive member, ensuring a reliable electrical connection between the box body and the box cover without the need for bolt fastening. This eliminates the need for a bolt-fastening station on the battery production line, thereby improving the production efficiency of the battery and reducing the production cost of the battery.

### BRIEF DESCRIPTION OF THE DRAWINGS

FIG. 1 is a schematic structural view of a battery box provided by an embodiment of the present application;
FIG. 2 is a partial top view of the battery box provided by an embodiment of the present application;
FIG. 3 is a partial structural schematic view of a cross-sectional view along line A-A in FIG. 2;
FIG. 4 is a schematic structural view of a conductive member provided by an embodiment of the present application;
FIG. 5 is a schematic structural view of another conductive member provided by an embodiment of the present application;
FIG. 6 is a side view of a conductive member provided by an embodiment of the present application;
FIG. 7 is a side view of another conductive member provided by an embodiment of the present application;
FIG. 8 is a schematic view of the position of a conductive member in an original state of the conductive member provided by an embodiment of the present application.

### Reference Numerals:

001 - Battery box;
011 - Box cover;
012 - Box body; 121 - Threaded hole;
013 - Installation cavity;
014 - Conductive member; 141 - First elastic piece; 1411 - First end; 1412 - Second end; 142 - Second elastic piece; 143 - Third elastic piece; 1431 - Third end; 1432 - Fourth end; 144 - Elastic piece segment; 145 - Anti-scratch piece; 146 - First vertical segment; 147 - Second vertical segment; 148 - Rounded chamfer; 149 - Through hole;
015 - Fixing bolt.

### DETAILED DESCRIPTION

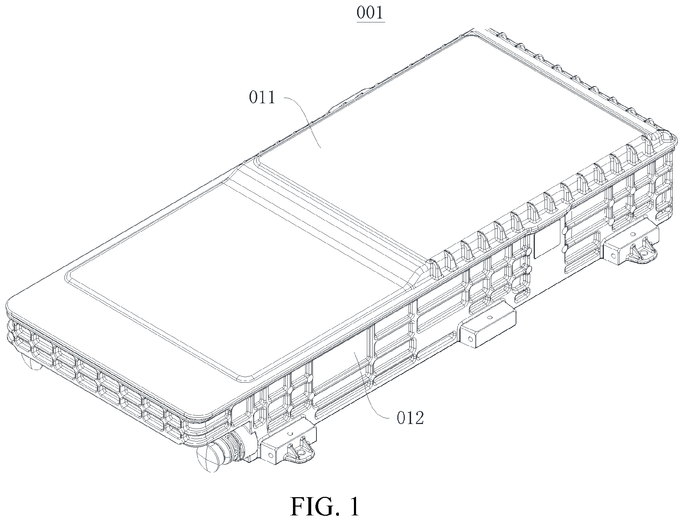

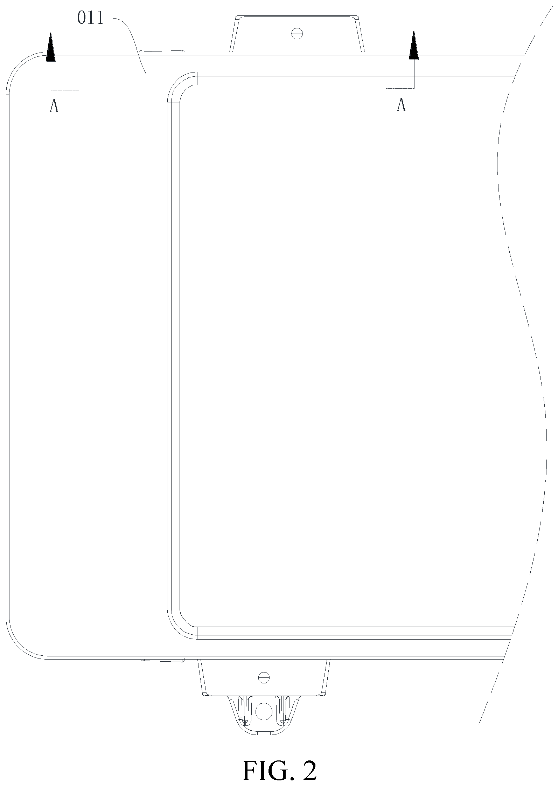

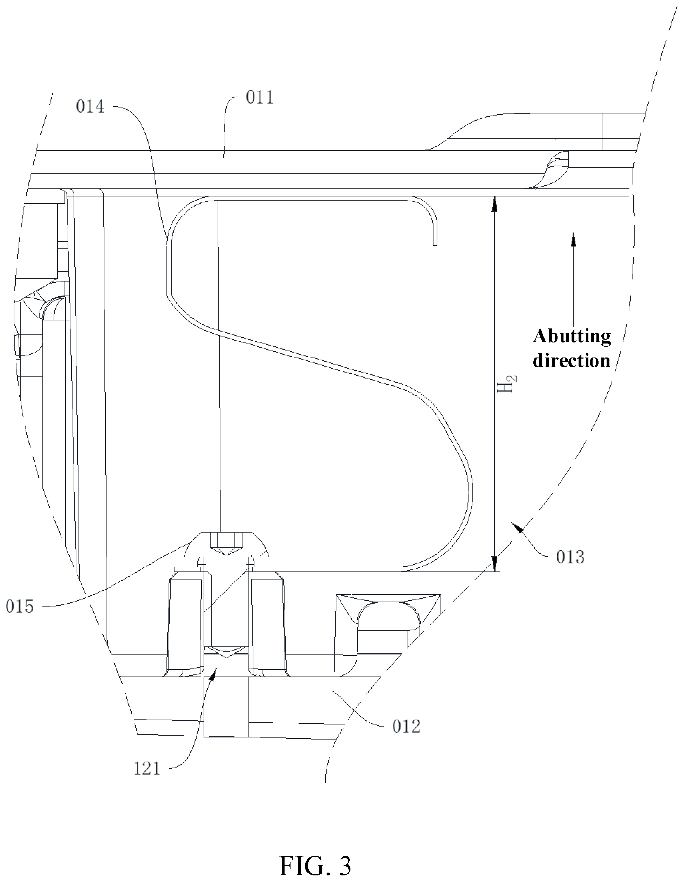

Referring to FIG. 1 to FIG. 3, FIG. 1 is a schematic structural view of a battery box 001 provided by an embodiment of the present application, FIG. 2 is a partial top view of the battery box 001 provided by an embodiment of the present application, and FIG. 3 is a partial structural schematic view of a cross-sectional view along line A-A in FIG. 2. An embodiment of the present application provides a battery box 001. The battery box 001 includes a box body 012, a box cover 011, and a conductive member 014. The box cover 011 is mounted on the box body 012 to define an installation cavity 013. The conductive member 014 is elastic. The conductive member 014 is located in the installation cavity 013. One of the box cover 011 and the box body 012 is connected to the conductive member 014, while the other abuts against the conductive member 014, and the conductive member 014 is in an elastically compressed state.

It can be understood that, to make the battery box 001 an electromagnetic shielding body with electromagnetic radiation resistance, the conductive member 014 is electrically connected to both the box body 012 and the box cover 011. Correspondingly, conductive surfaces are provided at the contact areas between the box body 012, the box cover 011, and the conductive member 014.

In one case, the box cover 011 abuts against the conductive member 014, and the box body 012 is connected to the conductive member 014. In this way, the conductive member 014 can first be fixed inside the box body 012, and as the box cover 011 is mounted on the box body 012, the box cover 011 gradually comes into contact with the conductive member 014. When the box cover 011 is fully mounted, the conductive member 014 is in an elastically compressed state.

Alternatively, the box cover 011 is connected to the conductive member 014, and the box body 012 abuts against the conductive member 014. In the present case, the conductive member 014 can first be fixed to a sidewall of the box cover 011 facing the box body 012, and as the box cover 011 is mounted on the box body 012, the conductive member 014 is inserted into the box body 012 and abuts against the box body 012. When the box cover 011 is fully mounted, the conductive member 014 is in an elastically compressed state.

After the box cover 011 is fully mounted, the box cover 011 compresses the conductive member 014 with a weight of the box cover 011, and the conductive member 014 tightly contacts the inner side of the box cover 011 through a rebound force of the conductive member 014, completing the electrical connection among the box body 012, the conductive member 014, and the box cover 011.

For example, the elasticity of the conductive member 014 refers to an ability of the conductive member 014 to compress and rebound. The structure of the conductive member 014 includes, but is not limited to, a spiral structure, a C-shaped structure, an S-shaped structure, a Z-shaped structure, or a bellows structure.

Additionally, the material of the conductive member 014 includes, but is not limited to, copper, iron, aluminum, or copper alloys. Optionally, the material of the conductive member 014 is C17200 beryllium copper.

In the present embodiment, by using the elastic conductive member 014 as the conductive component between the box body 012 and the box cover 011 and keeping the conductive member 014 in an elastically compressed state, the conductive member 014 can maintain tight contact with the box body 012 and the box cover 011 based on an elasticity of the conductive member 014, ensuring a reliable electrical connection between the box body 012 and the box cover 011 without the need for bolt fastening to achieve the electrical connection. This eliminates the need for a bolt-fastening station for the box body 012 and the box cover 011 on the battery production line, thereby improving the production efficiency of the battery and reducing the production cost of the battery.

Moreover, since there is no need to use bolts to fasten the box body 012 and the box cover 011, the box cover 011 can be fixed to the box body 012 by applying adhesive on the contact surface between the box body 012 and the box cover 011, forming an integral structure. This method of fixing the box cover 011 is simple and convenient, which can improve the production efficiency of the battery. Additionally, this method does not require holes in the box body 012 and the box cover 011 to accommodate bolts. This not only enhances the strength of the box body 012 and the box cover 011 but also eliminates the need to consider the arrangement of holes and potential interference with other components or structures, thereby reducing design complexity.

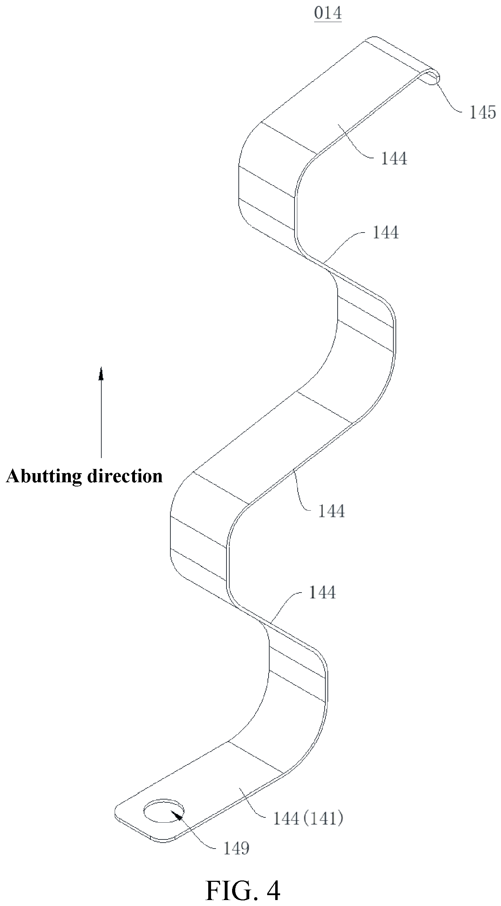

Referring to FIG. 4, FIG. 4 is a schematic structural view of a conductive member 014 provided by an embodiment of the present application. In one embodiment, along an abutting direction, the conductive member 014 includes a plurality of elastic piece segments 144 that are sequentially connected. Adjacent two of the elastic piece segments 144 are arranged at an angle, specifically, adjacent two of the elastic piece segments 144 are arranged at an acute angle. One of the box cover 011 and the box body 012 is connected to the elastic piece segment 144 at an end of the conductive member 014, while the other abuts against the elastic piece segment 144 at another end of the conductive member 014.

It can be understood that the conductive member 014 may include, for example, two, three, four, or five sequentially connected elastic piece segments 144. When the conductive member 014 includes two sequentially connected elastic piece segments 144, the conductive member 014 may have a V-shaped or U-shaped structure; when the conductive member 014 includes three sequentially connected elastic piece segments 144, the conductive member 014 may have a Z-shaped or S-shaped structure.

Additionally, the plurality of elastic piece segments 144 may be formed by repeatedly bending a single metal sheet, or the plurality of elastic piece segments 144 may be sequentially welded to form the conductive member 014.

In the present embodiment, the conductive member 014 includes a plurality of sequentially connected elastic piece segments 144, making the structure of the conductive member 014 simple and easy to manufacture, thereby improving the manufacturing efficiency of the battery box 001 and controlling the manufacturing cost of the battery box 001.

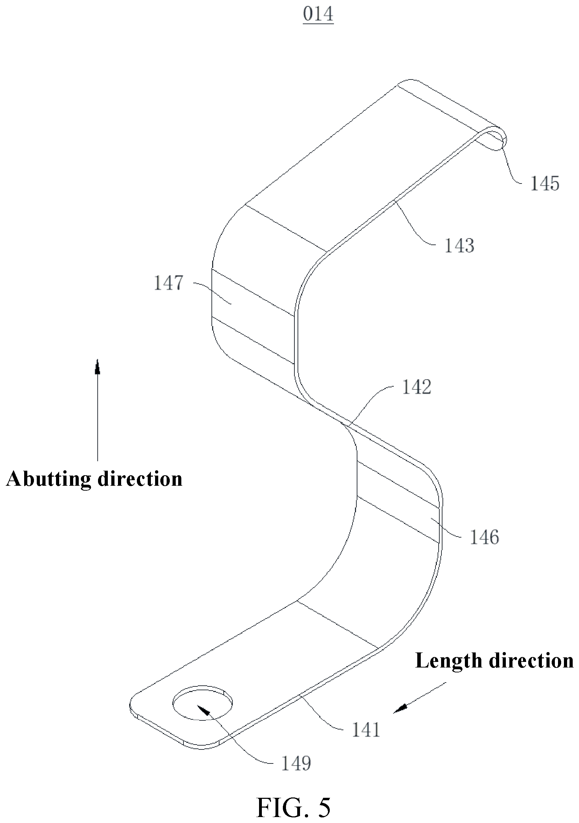

Referring to FIG. 5, FIG. 5 is a schematic structural view of another conductive member 014 provided by an embodiment of the present application. In one embodiment, the conductive member 014 includes three elastic piece segments 144. The three elastic piece segments 144 are a first elastic piece 141, a second elastic piece 142, and a third elastic piece 143, sequentially connected. One of the box cover 011 and the box body 012 is connected to the first elastic piece 141, while the other abuts against the third elastic piece 143.

In the present embodiment, the conductive member 014 includes three elastic piece segments 144. On one hand, this ensures that the conductive member 014 comprises sufficient elasticity to abut between the box cover and the box body 012, thereby improving the stability of the electrical connection between the conductive member 014, the box cover, and the box body 012. On the other hand, it makes the structure of the conductive member 014 easier to form with high forming efficiency.

Referring to FIG. 4, in one embodiment, the conductive member 014 further includes an anti-scratch piece 145. The anti-scratch piece 145 is arranged opposite the second elastic piece 142 and is connected to an end of the third elastic piece 143 away from the second elastic piece 142.

Specifically, a rounded chamfer 148 is provided at the connection between the third elastic piece 143 and the anti-scratch piece 145. The rounded chamfer 148 allows a smooth transition from the third elastic piece 143 to the anti-scratch piece 145, thereby reducing stress at the connection between the third elastic piece 143 and the anti-scratch piece 145.

In the present embodiment, by providing the anti-scratch piece 145 at the end of the third elastic piece 143 away from the second elastic piece 142, it is possible to prevent the third elastic piece 143 from scratching the component it abuts against. This prevents damage to the surface coating of the box body 012 or the box cover 011 that contacts the third elastic piece 143, thereby improving the reliability of the battery.

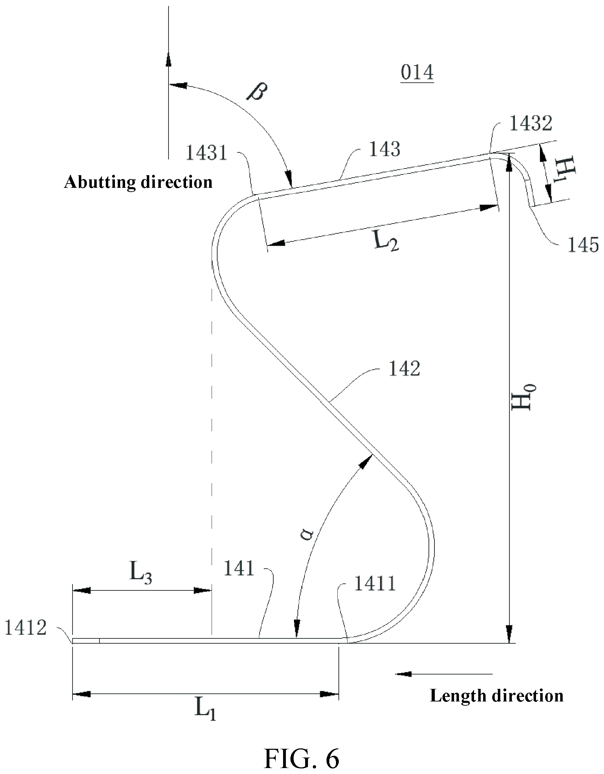

Referring to FIG. 6, FIG. 6 is a side view of a conductive member 014 provided by an embodiment of the present application. In one embodiment, along a direction perpendicular to the third elastic piece 143, the anti-scratch piece 145 comprises a height dimension H₁, satisfying 2 mm ≤ H₁ ≤ 5 mm.

It can be understood that H₁ may be, but is not limited to, 2 mm, 2.5 mm, 2.9 mm, 3 mm, 3.2 mm, 3.5 mm, 3.72 mm, 4 mm, 4.2 mm, 4.4 mm, 4.6 mm, 4.9 mm, or 5 mm.

Specifically, 3 mm ≤ H₁ ≤ 4 mm.

In the present embodiment, by defining the height dimension H₁ of the anti-scratch piece 145, on one hand, it prevents the height dimension of the anti-scratch piece 145 from being too small, which would result in poor anti-scratch performance; on the other hand, it prevents the height dimension of the anti-scratch piece from being too large, which would increase the material cost of the conductive member 014, thereby controlling the manufacturing cost of the battery box 001.

Referring to FIG. 5, in one embodiment, when the conductive member 014 is in a natural state, the first elastic piece 141 is perpendicular to the abutting direction, and an angle β is defined between the third elastic piece 143 and the abutting direction, satisfying 0 < β < 90°, with the angle β located on a side of the third elastic piece 143 facing away from the first elastic piece 141.

It can be understood that the angle β may be, but is not limited to, 5°, 10°, 15°, 17.5°, 19.5°, 20°, 25°, 30°, 35°, 36°, 37°, 40°, 45°, 48°, 50°, 55°, 58.2°, 60°, 66°, 75°, 85°, or 89°.

Specifically, 75° ≤ β ≤ 85°.

In the present embodiment, by defining the angle β, when the third elastic piece 143 abuts against the relevant component, the connection area between the second elastic piece 142 and the third elastic piece 143 is in a bent deformation state. On one hand, this increases the abutting force between the third elastic piece 143 and the component it abuts against, thereby enhancing the stability of the electrical connection between the third elastic piece 143 and the component it abuts against. On the other hand, it improves the elasticity of the conductive member 014, allowing it to meet the electrical connection requirements between the box body 012 and the box cover 011 with fewer elastic piece segments 144 while maintaining sufficient elasticity.

Referring to FIG. 5, in one embodiment, when the conductive member 014 is in a natural state, the angle between the second elastic piece 142 and the first elastic piece 141 is α, satisfying 30° ≤ α < 90°.

It can be understood that the angle α may be, but is not limited to, 5°, 10°, 15°, 17.5°, 19.5°, 20°, 25°, 30°, 35°, 36°, 37°, 40°, 45°, 48°, 50°, 55°, 58.2°, 60°, 66°, 75°, 85°, or 89°.

Specifically, 40° ≤ α ≤ 50°.

In the present embodiment, by defining the angle α, the first elastic piece 141 and the second elastic piece 142 have an appropriate angle. On one hand, this prevents the angle from being too small, which would result in insufficient elastic force when the second elastic piece 142 bends toward the first elastic piece 141, thereby increasing the elasticity of the conductive member. On the other hand, it prevents the angle from being too large, which would cause uncertainty in a bending deformation direction of the second elastic piece 142, thereby ensuring the bending deformation direction of the second elastic piece 142 is predictable and improving the reliability of the conductive member 014.

Referring to FIG. 5, in one embodiment, the first elastic piece 141 comprises a first end 1411 connected to the second elastic piece 142 and a second end 1412 away from the first end 1411. From the first end 1411 to the second end 1412, the first elastic piece 141 has a length dimension L₁, satisfying 5 mm ≤ L₁ ≤ 17.6 mm.

It can be understood that the length dimension L₁ of the first elastic piece 141 includes, but is not limited to, 5 mm, 5.2 mm, 5.4 mm, 6 mm, 6.7 mm, 7.2 mm, 8 mm, 9.9 mm, 11 mm, 12 mm, 13 mm, 14.5 mm, 15 mm, 16 mm, 16.8 mm, 17 mm, or 17.6 mm.

In the present embodiment, by defining the length dimension L₁ of the first elastic piece 141, it ensures that the first elastic piece 141 comprises an appropriate conductive contact length with the box body 012 and the box cover 011, improving the reliability of the electrical connection between the conductive member 014, the box body 012, and the box cover 011, while avoiding excessive length of the first elastic piece 141, which would increase the material cost of the conductive member 014.

Referring to FIG. 5, in one embodiment, the third elastic piece 143 comprises a third end 1431 connected to the second elastic piece 142 and a fourth end 1432 away from the third end 1431. From the third end 1431 to the fourth end 1432, the third elastic piece 143 has a length dimension L₂, satisfying 5 mm ≤ L₂ ≤ 17.6 mm.

It can be understood that, in some other embodiments, both the length dimension L₁ and the length dimension L₂ may be defined simultaneously. For example, in some embodiments, 5 mm ≤ L₁ ≤ 17.6 mm, and 5 mm ≤ L₂ ≤ 17.6 mm.

It can be understood that the length dimension L₂ of the third elastic piece 143 includes, but is not limited to, 5 mm, 5.2 mm, 5.4 mm, 6 mm, 6.7 mm, 7.2 mm, 8 mm, 9.9 mm, 11 mm, 12 mm, 13 mm, 14.5 mm, 15 mm, 16 mm, 16.8 mm, 17 mm, or 17.6 mm.

In the present embodiment, by defining the length dimension L₂ of the third elastic piece 143, it ensures that the third elastic piece 143 comprises an appropriate conductive contact length with the box body 012 and the box cover 011, improving the reliability of the electrical connection between the conductive member 014, the box body 012, and the box cover 011, while avoiding excessive length of the third elastic piece 143, which would increase the material cost of the conductive member 014.

Referring to FIG. 4, in one embodiment, the first elastic piece 141 comprises a first end 1411 connected to the second elastic piece 142 and a second end 1412 away from the first end 1411. A direction from the first end 1411 to the second end 1412 is a length direction. In a direction perpendicular to both the length direction and the abutting direction, the first elastic piece 141 has a width dimension W₁, satisfying 6 mm ≤ W₁ ≤ 8 mm.

It can be understood that the width dimension W₁ of the first elastic piece 141 may be, but is not limited to, 6 mm, 6.2 mm, 6.45 mm, 6.6 mm, 6.8 mm, 6.9 mm, 6.94 mm, 7 mm, 7.2 mm, 7.56 mm, 7.6 mm, 7.7 mm, 7.85 mm, or 8 mm.

In the present embodiment, by defining the width dimension W₁ of the first elastic piece 141, it ensures that the first elastic piece 141 comprises an appropriate conductive contact width with the box body 012 and the box cover 011, improving the reliability of the electrical connection between the conductive member 014, the box body 012, and the box cover 011, while avoiding excessive width of the first elastic piece 141, which would increase the material cost of the conductive member 014.

Referring to FIG. 4, in one embodiment, the first elastic piece 141 comprises a first end 1411 connected to the second elastic piece 142 and a second end 1412 away from the first end 1411. The direction from the first end 1411 to the second end 1412 is the length direction. In a direction perpendicular to both the length direction and the abutting direction, the third elastic piece 143 has a width dimension W₂, satisfying 6 mm ≤ W₂ ≤ 8 mm.

It can be understood that, in some embodiments, both the width dimension W₁ and the width dimension W₂ may be defined simultaneously. For example, in some embodiments, 6 mm ≤ W₁ ≤ 8 mm, and 6 mm ≤ W₂ ≤ 8 mm.

Additionally, the width dimension W₂ of the third elastic piece 143 may be, but is not limited to, 6 mm, 6.2 mm, 6.45 mm, 6.6 mm, 6.8 mm, 6.9 mm, 6.94 mm, 7 mm, 7.2 mm, 7.56 mm, 7.6 mm, 7.7 mm, 7.85 mm, or 8 mm.

In the present embodiment, by defining the width dimension W₂ of the third elastic piece 143, it ensures that the third elastic piece 143 comprises an appropriate conductive contact width with the box body 012 and the box cover 011, improving the reliability of the electrical connection between the conductive member 014, the box body 012, and the box cover 011, while avoiding excessive width of the third elastic piece 143, which would increase the material cost of the conductive member 014.

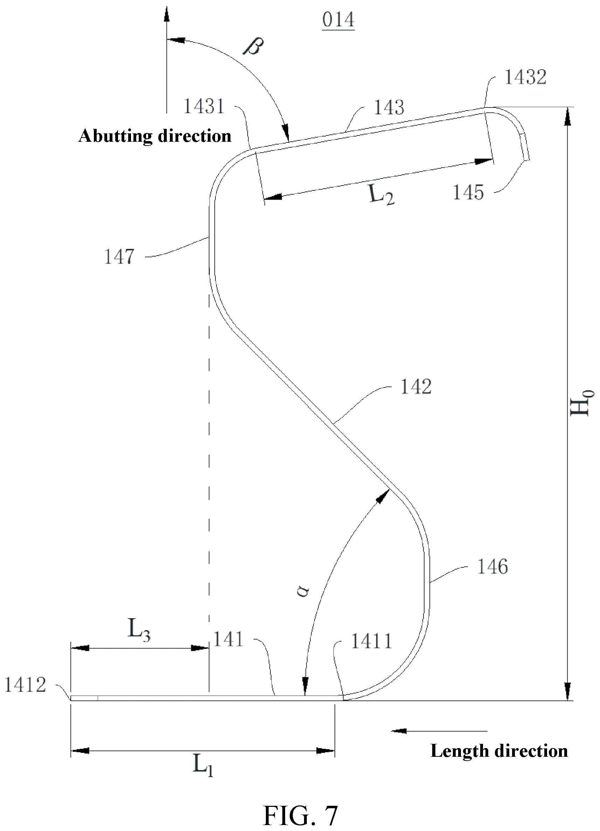

Referring to FIG. 7, FIG. 7 is a side view of another conductive member 014 provided by an embodiment of the present application. In one embodiment, the conductive member 014 further includes a first vertical segment 146. The first vertical segment 146 is located between the first elastic piece 141 and the second elastic piece 142. Two ends of the first vertical segment 146 are respectively connected to the first elastic piece 141 and the second elastic piece 142, and an extension direction of the first vertical segment 146 is parallel to the abutting direction.

In the present embodiment, by providing the first vertical segment 146, on one hand, when the required height dimension of the conductive member 014 is large, the first vertical segment 146 can be added to meet the height requirement; on the other hand, it allows the conductive member 014 to have greater rigidity in the abutting direction, thereby expanding the material options for the conductive member 014, so that the conductive member 014 can have both suitable conductivity and suitable elasticity.

Referring to FIG. 7, in one embodiment, the conductive member 014 further includes a second vertical segment 147. The second vertical segment 147 is located between the second elastic piece 142 and the third elastic piece 143. Two ends of the second vertical segment 147 are respectively connected to the second elastic piece 142 and the third elastic piece 143, and an extension direction of the second vertical segment 147 is parallel to the abutting direction.

It can be understood that the conductive member 014 may include both the first vertical segment 146 and the second vertical segment 147 simultaneously.

In the present embodiment, by providing the second vertical segment 147, on one hand, when the required height dimension of the conductive member 014 is large, the second vertical segment 147 can be added to meet the height requirement; on the other hand, it allows the conductive member 014 to have greater rigidity in the abutting direction, thereby expanding the material options for the conductive member 014, so that the conductive member 014 can have both suitable conductivity and suitable elasticity.

Specifically, rounded chamfers 148 are provided at the connection between the first vertical segment 146 and the first elastic piece 141 and at the connection between the first vertical segment 146 and the second elastic piece 142. The rounded chamfers 148 allow a smooth transition from the first vertical segment 146 to the first elastic piece 141 and the second elastic piece 142, thereby reducing stress at the connection between the first vertical segment 146 and the first elastic piece 141 and at the connection between the first vertical segment 146 and the second elastic piece 142.

Correspondingly, rounded chamfers 148 are provided at the connection between the second vertical segment 147 and the second elastic piece 142 and at the connection between the second vertical segment 147 and the third elastic piece 143. The rounded chamfers 148 allow a smooth transition from the second vertical segment 147 to the second elastic piece 142 and the third elastic piece 143, thereby reducing stress at the connection between the second vertical segment 147 and the second elastic piece 142 and at the connection between the second vertical segment 147 and the third elastic piece 143.

Referring to FIG. 3, in one embodiment, the battery box 001 further includes a fixing bolt 015. The conductive member 014 includes a plurality of sequentially connected elastic piece segments 144. The elastic piece segment 144 connected to one of the box cover 011 and the box body 012 is the first elastic piece 141. The elastic piece segment 144 away from the first elastic piece 141 abuts against the other of the box cover 011 and the box body 012. The first elastic piece 141 is provided with a through hole 149. The fixing bolt 015 comprises a threaded end passing through the through hole 149 and is connected to the one of the box cover 011 and the box body 012 that is connected to the first elastic piece 141.

Specifically, the first elastic piece 141 is connected to the box body 012, and a threaded hole 121 is provided on the box body 012. The threaded end of the fixing bolt 015 passes through the through hole 149 and is threadedly connected to the threaded hole 121.

In the present embodiment, with the above configuration, the installation structure of the conductive member 014 is simple and easy to implement, thereby controlling the production cost of the battery box 001.

Referring to FIG. 7, in one embodiment, the elastic piece segments 144 other than the first elastic piece 141 form a main body. The first elastic piece 141 comprises a first end 1411 connected to the main body and a second end 1412 away from the first end 1411. The through hole 149 is provided away from the first end 1411. In the direction from the first end 1411 to the second end 1412, the minimum distance between the first end 1411 and the main body is L₃, satisfying 7.7 mm ≤ L₃ ≤ 10 mm.

It can be understood that the distance L₃ may be, but is not limited to, 7.7 mm, 7.89 mm, 8 mm, 8.23 mm, 8.4 mm, 8.6 mm, 8.7 mm, 9 mm, 9.2 mm, 9.5 mm, 9.7 mm, or 10 mm.

In the present embodiment, by defining the above, it ensures sufficient tool operation space when fastening the conductive member 014 with bolts, thereby reducing the difficulty of bolt fastening.

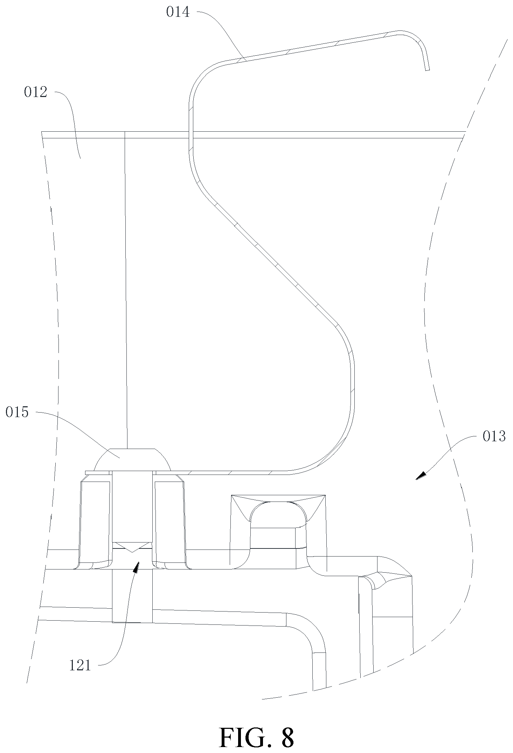

Referring to FIG. 8, FIG. 8 is a schematic view of the position of a conductive member 014 in an original state of conductive member 014 provided by an embodiment of the present application. In one embodiment, when the conductive member 014 is in a natural state, the dimension of the conductive member 014 in the abutting direction is H₀. When the conductive member 014 is in an elastically compressed state, the dimension of the conductive member 014 is H₂, satisfying 0.7H₀ ≤ H₂ ≤ 0.8H₀.

It can be understood that the dimensional relationship of the conductive member 014 before and after compression may be, but is not limited to, 0.7H₀, 0.71H₀, 0.72H₀, 0.735H₀, 0.75H₀, 0.761H₀, 0.77H₀, 0.78H₀, 0.79H₀, 0.792H₀, 0.795H₀, or 0.8H₀.

In the present embodiment, by defining the dimensional relationship of the conductive member 014 before and after compression, on one hand, it prevents the deformation of the conductive member 014 from being too small, ensuring an appropriate abutting force between the conductive member 014, the box body 012, and the box cover 011, thereby improving the reliability of the electrical connection between the box body 012 and the box cover 011. On the other hand, it ensures that the conductive member 014 does not undergo yield deformation after compression, allowing the conductive member 014 to retain rebound performance of the conductive member 014 and be reusable.

Correspondingly, an embodiment of the present application provides a battery, which includes a battery module and the battery box 001 provided by some embodiments of the present application, with the battery module disposed in the installation cavity 013.

It can be understood that the battery module includes a plurality of battery cells connected in series or parallel.

In the present embodiment, by using the battery box 001 provided by some embodiments of the present application, the electrical connection between the box body 012 and the box cover 011 can be achieved through the conductive member 014, eliminating the need for bolt fastening. This eliminates the need for a bolt-fastening station on the battery production line, thereby improving the production efficiency of the battery and reducing the production cost of the battery.

## Claims

1. A battery box (001), comprising:
a box body (012);
a box cover (011) mounted on the box body (012) to define an installation cavity (013); and
a conductive member (014), which is elastic, wherein the conductive member (014) is located in the installation cavity (013), one of the box cover (011) and the box body (012) is connected to the conductive member (014), the other abuts against the conductive member (014), and the conductive member (014) is in an elastically compressed state.

2. The battery box (001) according to claim 1, wherein along an abutting direction, the conductive member (014) comprises a plurality of elastic piece segments (144) that are sequentially connected, and adjacent two of the elastic piece segments (144) are arranged at an angle; and
wherein one of the box cover (011) and the box body (012) is connected to the elastic piece segment (144) at an end of the conductive member (014), and the other abuts against the elastic piece segment (144) at another end of the conductive member (014).

3. The battery box (001) according to claim 2, wherein the conductive member (014) comprises three elastic piece segments (144), the three elastic piece segments (144) are a first elastic piece (141), a second elastic piece (142), and a third elastic piece (143) sequentially connected, one of the box cover (011) and the box body (012) is connected to the first elastic piece (141), and the other abuts against the third elastic piece (143).

4. The battery box (001) according to claim 3, wherein the conductive member (014) further comprises an anti-scratch piece (145), the anti-scratch piece (145) is arranged opposite the second elastic piece (142) and connected to an end of the third elastic piece (143) away from the second elastic piece (142).

5. The battery box (001) according to claim 4, wherein, along the direction perpendicular to the third elastic piece (143), the anti-scratch piece (145) comprises a height dimension H₁, satisfying 2 mm ≤ H₁ ≤ 5 mm.

6. The battery box (001) according to any one of claims 3-5, wherein, when the conductive member (014) is in a natural state, the first elastic piece (141) is perpendicular to the abutting direction, and an angle β is defined between the third elastic piece (143) and the abutting direction, satisfying 0 < β < 90°, the angle β is located on a side of the third elastic piece (143) facing away from the first elastic piece (141).

7. The battery box (001) according to any one of claims 3-6, wherein, when the conductive member (014) is in a natural state, the angle between the second elastic piece (142) and the first elastic piece (141) is α, satisfying 30° ≤ α < 90°.

8. The battery box (001) according to any one of claims 3-7, wherein the first elastic piece (141) comprises a first end (1411) connected to the second elastic piece (142) and a second end (1412) away from the first end (1411), and from the first end (1411) to the second end (1412), the first elastic piece (141) has a length dimension L₁, satisfying 5 mm ≤ L₁ ≤ 17.6 mm, and/or,
the third elastic piece (143) comprises a third end (1431) connected to the second elastic piece (142) and a fourth end (1432) away from the third end (1431), and from the third end (1431) to the fourth end (1432), the third elastic piece (143) has a length dimension L₂, satisfying 5 mm ≤ L₂ ≤ 17.6 mm.

9. The battery box (001) according to any one of claims 3-8, wherein the first elastic piece (141) comprises a first end (1411) connected to the second elastic piece (142) and a second end (1412) away from the first end (1411), a direction from the first end (1411) to the second end (1412) is a length direction, and in a direction perpendicular to both the length direction and the abutting direction, the first elastic piece (141) has a width dimension W₁, satisfying 6 mm ≤ W₁ ≤ 8 mm, and/or, the third elastic piece (143) has a width dimension W₂, satisfying 6 mm ≤ W₂ ≤ 8 mm.

10. The battery box (001) according to any one of claims 3-9, wherein the conductive member (014) further comprises a first vertical segment (146), the first vertical segment (146) is located between the first elastic piece (141) and the second elastic piece (142), two ends of the first vertical segment (146) are respectively connected to the first elastic piece (141) and the second elastic piece (142), and an extension direction of the first vertical segment (146) is parallel to the abutting direction, and/or, the conductive member (014) further comprises a second vertical segment (147), the second vertical segment (147) is located between the second elastic piece (142) and the third elastic piece (143), two ends of the second vertical segment (147) are respectively connected to the second elastic piece (142) and the third elastic piece (143), and an extension direction of the second vertical segment (147) is parallel to the abutting direction.

11. The battery box (001) according to any one of claims 1-10, wherein the battery box (001) further comprises a fixing bolt (015), the conductive member (014) comprises a plurality of elastic piece segments (144) that are sequentially connected, the elastic piece segment (144) connected to one of the box cover (011) and the box body (012) is the first elastic piece (141), and the elastic piece segment (144) away from the first elastic piece (141) abuts against the other of the box cover (011) and the box body (012); and
wherein is provided on the first elastic piece (141) is provided with a through hole (149), and the fixing bolt (015) comprises a threaded end passing through the through hole (149) and is connected to the one of the box cover (011) and the box body (012) that is connected to the first elastic piece (141).

12. The battery box (001) according to claim 11, wherein the elastic piece segments (144) other than the first elastic piece (141) form a main body, the first elastic piece (141) comprises a first end (1411) connected to the main body and a second end (1412) away from the first end (1411), the through hole (149) is provided away from the first end (1411), and in the direction from the first end (1411) to the second end (1412), the minimum distance between the first end (1411) and the main body is L₃, satisfying 7.7 mm ≤ L₃ ≤ 10 mm.

13. The battery box (001) according to any one of claims 1-12, wherein, when the conductive member (014) is in a natural state, the dimension of the conductive member (014) in the abutting direction is H₀, and when the conductive member (014) is in the elastically compressed state, the dimension of the conductive member (014) is H₂, satisfying 0.7H₀ ≤ H₂ ≤ 0.8H₀.

14. A battery, comprising:
the battery box (001) according to any one of claims 1-13; and
a battery module disposed in the installation cavity (013).
